**Europäisches Patentamt**

**European Patent Office**

**Office européen des brevets**

(19)

(11) Veröffentlichungsnummer: **0 049 746**
**B1**

(12)

# EUROPÄISCHE PATENTSCHRIFT

(45) Veröffentlichungstag der Patentschrift:
**14.12.83**

(21) Anmeldenummer: **81106222.3**

(22) Anmeldetag: **08.08.81**

(51) Int. Cl.³: **B 01 D 25/16**

(54) **Spaltfilter für Schmieröl.**

(30) Priorität: **10.10.80 DE 3038296**

(43) Veröffentlichungstag der Anmeldung:
**21.04.82 Patentblatt 82/16**

(45) Bekanntmachung des Hinweises auf die Patenterteilung:
**14.12.83 Patentblatt 83/50**

(84) Benannte Vertragsstaaten:
**CH DE FR GB LI SE**

(56) Entgegenhaltungen:
**US - A - 2 029 611**
**US - A - 2 084 433**
**US - A - 2 167 322**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Boemer, Emil, Ing.grad., Thurner Strasse 34,**
**D-5000 Köln 80 (DE)**

## Spaltfilter für Schmieröl

Die Erfindung betrifft einen Spaltfilter für Schmieröl gemäss dem Oberbegriff des Hauptanspruchs. Filter dieser Bauart können während des Betriebes vom angesetzten Schmutz durch Abkratzen und Ausspülen gereinigt werden.

In der EP-A-0 047 836 (veröffentlicht am 24.03.1982, Priorität 13.09.1980) ist ein Spaltfilter ähnlicher Bauweise beschrieben worden, bei dem in einem ersten Reinigungsschritt der angesetzte Schmutz beim Drehen des Filtereinsatzes abgekratzt wird und bei dem in einem zweiten Reinigungsschritt zunächst das Reinigungselement durch Verstellen den Spülkanal bildet und anschliessend durch Öffnen des Absperrorgans an der Ausspülöffnung eine Rückspül- und Ausspülvorgang stattfindet. Um eine Rückspülung auf dem gesamten Umfang des Filtereinsatzes zu erzielen, muss dieser zusätzlich zum Abkratzen eine weitere vollständige Umdrehung vollziehen.

Bei einem weiteren Spaltfilter ähnlicher Bauart liegt die Anlagekante des Reinigungselementes nicht dichtend am Filtereinsatz an, so dass ein ständiger Lecköölverlust vom äusseren Ringraum ausserhalb des Filtereinsatzes zum Spülkanal hin stattfindet (GB-A-1 113 114). Dies bewirkt einen unerwünschten Druckverlust am Filter.

Der Erfindung liegt die Aufgabe zugrunde, ein zum Reinigen während des Betriebes geeignetes Spaltfilter zu schaffen, dessen Bedienungsabfolge bei der Reinigung einfach ist und das ein sicheres Ausspülen des abgekratzten Schlammes beim Reinigungsvorgang ermöglicht.

Die Lösung der Erfindung liegt darin, dass das Reinigungselement aus einem oder mehreren Profilen besteht, die einen Spülkanal bilden, der mit der Ausspülöffnung verbunden ist, dass das Reinigungselement eine tangential am Filtereinsatz anliegende, entgegen der Drehrichtung endende und in Drehrichtung vor der Anlagekante vorgesehene Abstreifleiste und eine entlang dieser im wesentlichen parallel dazu liegende Blechlippe aufweist und dass die Abstreifleiste und die Blechlippe gemeinsam einen Eintrittsspalt zum Spülkanal im Reinigungselement bilden. Durch die unveränderliche Lage des Spülkanals im Spaltfilter und die besondere Ausgestaltung des Eintrittsspaltes zum Spülkanal können das Abstreifen der Verschmutzung und das Ausspülen gleichzeitig erfolgen. Die Bedienung reduziert sich hierdurch in vorteilhafter Weise auf das Drehen des Filtereinsatzes. Der abgekratzte Schlamm wird hierbei sofort durch eine geringe, aber mit hoher Geschwindigkeit durch den Eintrittsspalt führende Schmutzölmenge durch den Spülkanal ausgetragen. Die hohe Strömungsgeschwindigkeit an der Abstreifkante trägt zur Unterstützung des Reinigungsvorgangs und zur Ablösung festsitzenden Schlammes in günstiger Weise bei. Die Verlustölmenge ist durch das enge Mass des Eintrittsspaltes begrenzt, so dass der Druckverlust im Schmierölsystem vertretbar ist. In sinnvoller Weise wird Schmutzöl anstelle von Reinöl zum Ausspülen benutzt. Die Gestaltung des Reinigungselementes kann vorwiegend nach fertigungstechnischen Gesichtspunkten erfolgen, da nur an die Form des Eintrittsspaltes bestimmte Bedingungen geknüpft sind und ansonsten nur die Ausbildung zweier Auflagekanten zur stabilen Abstützung gegen den Filtereinsatz notwendig ist. Es ist die Herstellung aus einem einzigen Profil, aber auch die Verbindung mehrerer Profile in funktionsgerechter Weise möglich. Die Spaltbreite und -form stellt in Abhängigkeit von Öldruck und Viskosität die Ausspülmenge ein.

Sofern das ständige Abströmen einer Ausspülmenge im Verhältnis zur Gesamtförderung als zu stark erscheint, kann erfindungsgemäss an der Ausspülöffnung ein Absperrorgan vorgesehen werden, das erst unmittelbar vor dem Drehen des Filtereinsatzes geöffnet wird und unmittelbar danach wieder geschlossen werden kann.

In besonderer erfindungsgemässer Ausgestaltung wird die zusammen mit der Abstreifleiste den Eintrittsspalt bildende Blechlippe mit Wellen oder Noppen versehen. Bei Kontakt mit der Abstreifleiste ergibt sich durch die Höhe dieser Wellen oder Noppen die gewünschte Spaltbreite.

In verschiedenen Ausgestaltungen ist vorgesehen, dass der Eintrittsspalt entweder in ganzer Länge sich unmittelbar zum Spülkanal hin öffnet oder aber blind endet und durch einzelne Öffnungen in den Profilen seitlich mit dem Spülkanal verbunden ist.

Durch besondere erfindungsgemässe Ausgestaltungen kann eine Rückströmung von Reinöl aus dem Inneren des Filtereinsatzes in den Spülkanal zu Reinigungszwecken vorgesehen sein. Hierbei sind Ausführungen mit im Querschnitt geschlossenen aus Profilen gebildetem Spülkanal und mit einem aus einem Teil des Filtereinsatzes zusammen mit im Gesamtquerschnitt offenen Profilen gebildetem Spülkanal möglich.

Ist der Spülkanal im Querschnitt gegenüber dem Filtereinsatz abgeschlossen, so wird das Reinigungselement erfindungsgemäss so ausgebildet, dass es zwischen der Abstreifleiste und der Anlagekante mit einem Teil der Mantelfläche des Filtereinsatzes einen Sammelkanal bildet. Dieser Sammelkanal wird durch Öffnungen in den entsprechenden Profilen erfindungsgemäss mit dem Spülkanal verbunden, wobei rückspülendes Reinöl durch die Spalte des Filtereinsatzes zunächst in den Sammelkanal und dann durch die Öffnungen in den Profilen in den Spülkanal strömt. Der Eintrittsspalt ist hierbei vorzugsweise unmittelbar als Unterbrechung im Querschnitt des Spülkanals ausgebildet.

Sofern in erfindungsgemässer Ausführung der Gesamtquerschnitt der Profile zum Filtereinsatz hin offen ist und der Spülkanal gemeinsam mit einem Teil der Mantelfläche gebildet wird, tritt rückspülendes Reinöl aus dem Filtereinsatz unmittelbar in den Spülkanal. Mit dieser Ausführung ist vorzugsweise eine Anordnung verbunden, bei der über Öffnungen in den Profilen ein Übertritt des über die Abstreifkante und durch einen blind endenden Eintrittsspalt fliessenden Schmutzöls in den Spülkanal erfolgt.

Die erfindungsgemässe Wirkung besteht in beiden Fällen darin, dass während des Drehens des Filtereinsatzes in einem stetig über dessen Mantelfäche wandernden Abschnitt eine Rückspülung stattfindet, die in den Spalten festgesetzte Verunreinigungen vollständig herausspült. Auf diese Weise wird während nur einer Umdrehung des Filtereinsatzes eine erhöhte Reinigungswirkung erzielt. Anhand von drei Abbildungen soll die Erfindung im folgenden verdeutlicht werden.

Fig. 1 zeigt in zwei Schnitten einen erfindungsgemässen Spaltfilter ohne Rückströmung,

Fig. 2 zeigt in zwei Schnitten einen erfindungsgemässen Spaltfilter mit partieller Rückströmung,

Fig. 3 zeigt vier Ausführungsbeispiele erfindungsgemässer Reinigungselemente.

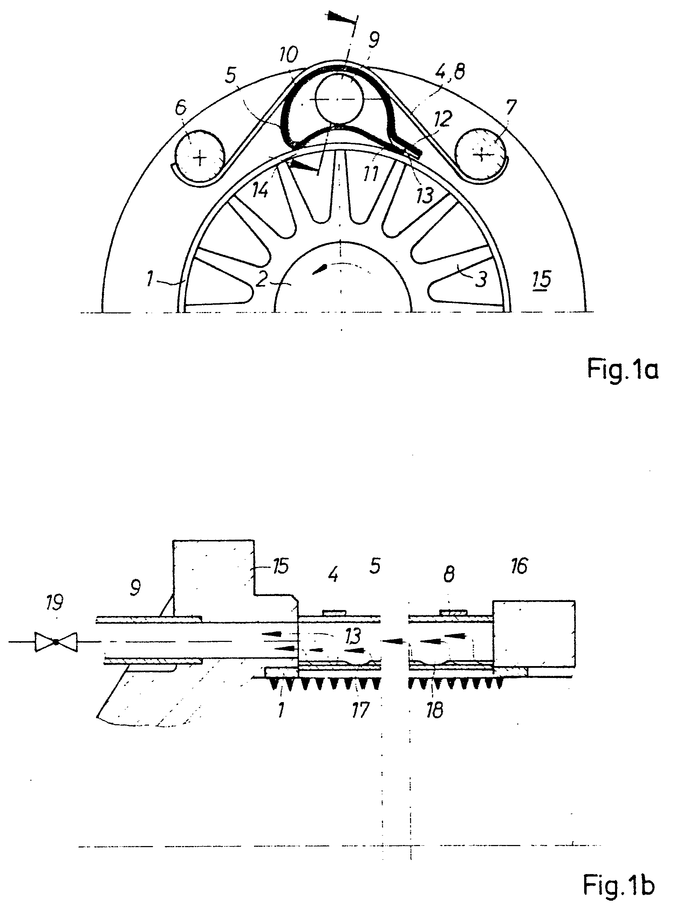

In Fig. 1a ist ein Filtereinsatz 1 mit einer Drehachse 2 und einem Trägerstern 3 gezeigt. Der Filtereinsatz 1 ist drehbar gegenüber einer gehäusefesten Stirnplatte 15, die zusammen mit einer weiteren vorderen Stirnplatte 16 ein Reinigungselement 5 axial führt und Zapfen oder Stangen 6, 7 trägt, gegen die sich Federn 4, 8 abstützen, mit der das Reinigungselement 5 an den Filtereinsatz 1 angedrückt wird. In der Stirnplatte 15 ist eine Auspülöffnung 9 erkennbar, die mit einem Spülkanal 10 innerhalb des Reinigungselementes 5 in Verbindung steht. Eine Abstreifleiste 11 liegt tangential am Filtereinsatz 1 an und bildet zusammen mit einer Blechlippe 12 einen Eintrittsspalt 13. Das Reinigungselement 5 liegt an der Abstreifleiste 11 und längs einer weiteren Anlagekante 14 am Filtereinsatz 1 unveränderlich an. In Fig. 1b ist ein Filter in gleicher Ausführung im Längsschnitt dargestellt, bei dem zwischen den Stirnplatten 15 und 16 das Reinigungselement 5 sowie der Filtereinsatz 1 zu erkennen ist. Der Filtereinsatz 1 ist gegenüber den Stirnplatten 15, 16 verdrehbar ausgeführt. In der linken Stirnplatte 15 ist die Auspülöffnung 9 erkennbar. Die Stirnplatten 15, 16 sind zueinander in etwa einem der Länge des Reinigungselements 5 entsprechenden Abstand fixiert. Die gehäusefesten Stirnplatten 15, 16 sind im Normalfall nicht selber Teile des Gehäuses des Spaltfilters, sondern dienen nur als Widerlage für die Drehachse 2 und die Stangen 6, 7 und sind selbst als Gesamtheit mit dem Filtereinsatz 1 aus dem Gehäuse des Spaltfilters herausziehbar ausgeführt. Dadurch braucht nach Kontrolle des Spaltfilters das Reinigungselement 5 nicht mit den Federn 4, 8 neu gegenüber dem Filtereinsatz 1 fixiert zu werden. An der Abstreifleiste 11 sind im Eintrittsspalt 13 Wellen 17, 18 in der Blechlippe 12 erkennbar, die die Breite des Eintrittsspalts 13 bestimmen. Die Auspülöffnung 9 weist ein Absperrorgan 19 auf. Wie durch Pfeile verdeutlicht wird, tritt ausschliesslich durch den Eintrittsspalt 13 Schmutzöl in den Spülkanal 10 ein, wobei es den von der Abstreifleiste 11 gelösten Schlamm durch die Ausspülöffnung 9 aus dem Spaltfilter austrägt.

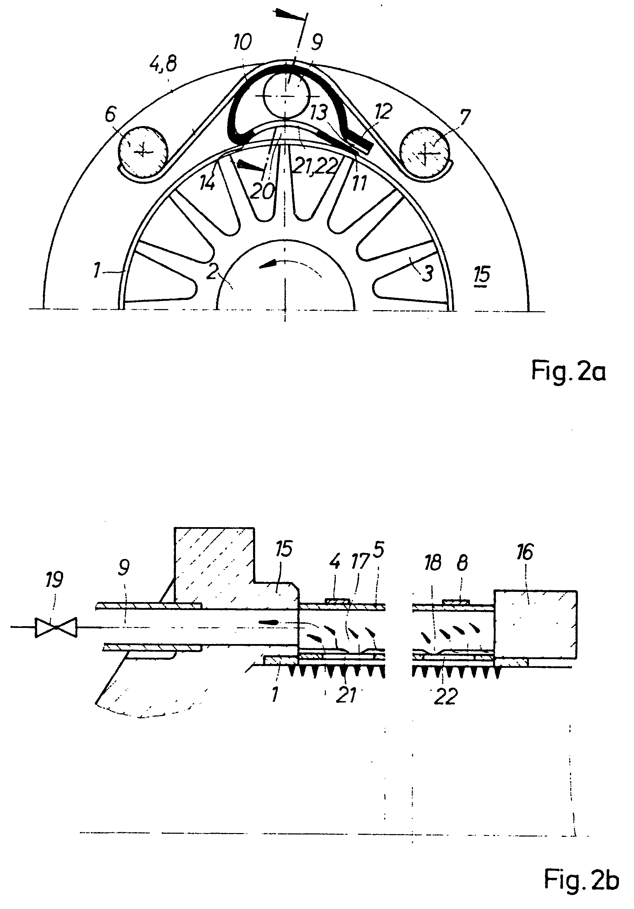

In Fig. 2a findet sich im wesentlichen die gleiche Darstellung wie in Fig. 1a, jedoch befinden sich im Boden des Reinigungselements 5 Öffnungen 21, 22, die einen Übertritt von einem zwischen Abstreifleiste 11 und Anlagekante 14 mit dem Filtereinsatz 1 gebildeten Sammelkanal 20 zum Spülkanal 10 ermöglichen. Sobald das Absperrorgan 19 geöffnet ist, findet nebem dem Ausspülvorgang durch den Eintrittsspalt 13 in den Spülkanal 10 eine Rückspülung aus dem Inneren des Filtereinsatzes 1 über den Sammelkanal 20 und die Öffnungen 21, 22 in den Spülkanal 10 statt, durch die die gesamte Oberfläche des Filtereinsatzes 1 während einer Umdrehung zusätzlich gereinigt wird. Fig. 2b entspricht im wesentlichen Fig. 1b. Durch Pfeile ist jedoch verdeutlicht, dass hier zusätzlich eine Rückspülung aus dem Inneren des Filtereinsatzes 1 durch die Filterspalte stattfindet, die dabei weiter gereinigt werden. Der Rückspülstrom tritt in den Sammelkanal 20, von dort über Öffnungen 21, 22 in den Spülkanal 10 und weiter durch die Ausspülöffnung 9 aus dem Spaltfilter aus.

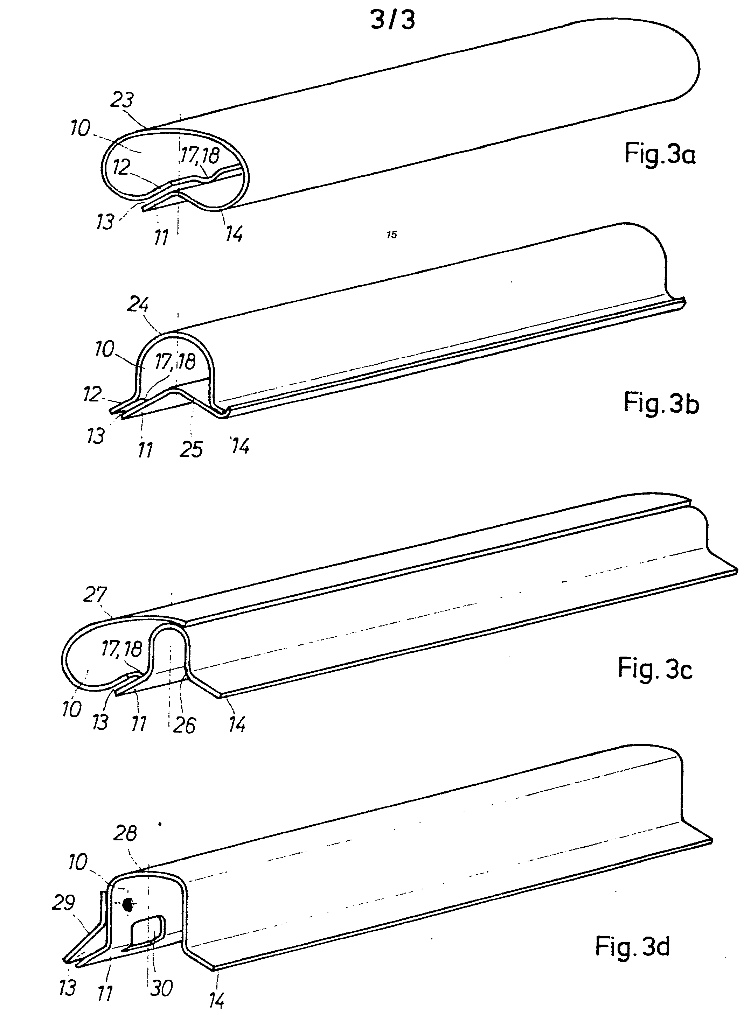

Fig. 3 zeigt vier weitere Ausführungen von erfindungsgemässen Reinigungselementen. In Fig. 3a ist das Reinigungselement 5 aus einem gerollten Profil 23 herausgestellt, dessen überlappende Enden die Abstreifleiste 11 und die Blechlippe 12 bilden. Der Boden des im Inneren gebildeten Spülkanals 10 weist eine Anlagekante 14 auf. Die Blechlippe 12 ist mit Wellen 17, 18 versehen, die an der Abstreifleiste 11 anliegen und die Spaltbreite festlegen. Eine Berührung kommt üblicherweise durch die Spannung der Federn 4, 8 zustande. Abstreifleiste 11 und Blechlippe 12 können darüberhinaus am Eintrittsspalt 13 miteinander durch geeignete Mittel verbunden werden. Eine Wölbung im Profil 23 zwischen der Abstreifleiste 11 und der Anlagekante 14 ist geeignet, mit der Mantelfläche des Filtereinsatzes 1 einen Sammelkanal 20 zu bilden, der über nicht dargestellte Öffnungen 21, 22 im Profil 23 mit dem Spülkanal 10 in Verbindung steht. In Fig. 3b ist das Reinigungselement aus zwei Profilen, einem U-Profil 24 und einem Dachprofil 25 zusammengesetzt. Beide bilden den Spülkanal 10 und sind längs der Anlagekante 14 und ggfs. am Eintrittsspalt 13 miteinander verbunden. Zwischen der Abstreifleiste 11 der Anlagekante 14 können das Reinigungselement 5 und der Filtereinsatz 1 einen Sammelkanal 20 bilden, wenn im Profil 25 des Reinigungselements 5 zwischen Abstreifleiste 11 und Anlagekante 14 nicht dargestellte Öffnungen 21, 22 vorgesehen sind. In Fig. 3c ist das Reinigungselement 5 wiederum aus zwei Profilen, einem U-Profil 26 und einem C-Profil 27 gebildet. Beide sind längs der Sohle des U-Profils 26 und ggfs. am Eintrittsspalt 13 miteinander verbunden. Hierbei bildet der zwischen U-Profil 26 und C-Profil 27 eingeschlossene Raum den Spülkanal 10. Der gesamte Querschnitt des U-Profils 26 kann in Zusammenwirken mit dem Filtereinsatz 1 als Sammelkanal 20 dienen, wenn nicht dargestellte Öffnungen 21, 22 in dem zum C-Profil 27 gewandten Teil des U-Profils 26 vorgesehen werden. In Fig. 3d besteht das Reinigungselement 5 aus einem U-Profil 28 und einem angenieteten Winkelprofil 29, das mit dem entsprechenden Schenkel des U-Profils 28 einen blind endenden Eintrittsspalt 13 bildet. Öffnungen 30 dienen zum Übertritt des in den Eintrittsspalt 13 einfliessenden Ölstroms in das den Spülkanal 10 bildende Innere des U-Profils 28, das mit der Ausspülöffnung 9 verbunden ist und gleichzeitig den aus dem Inneren des Filtereinsatzes 1 rückspülenden Ölstrom aufnimmt.

**Patentansprüche**

1. Spaltfilter für Schmieröl oder dergl. mit einem Gehäuse und einem darin drehbaren zylindrischen Filtereinsatz (1), einer mit dem Raum ausserhalb der Mantelfläche des Filtereinsatzes (1) im Gehäuse verbundenen Zuströmöffnung, einer ausserhalb der Mantelfläche des Filtereinsatzes im Gehäuse angeordneten Ausspülöffnung (9) und einer mit dem Inneren des Filtereinsatzes (1) in Verbindung stehenden, im Gehäuse angeordneten Abströmöffnung sowie einem längs eines Mantelbereichs des Filtereinsatzes (1) vorgesehenen Reinigungselement (5), das eine am Filtereinsatz (1) aufliegende Anlagekante aufweist, dadurch gekennzeichnet, dass das Reinigungselement (5) aus einem oder mehreren Profilen (23 bis 29) besteht, die einen Spülkanal (10) bilden, der mit der Ausspülöffnung (9) verbunden ist, dass das Reinigungselement (5) eine tangential am Filtereinsatz (1) anliegende, entgegen der Drehrichtung endende und in Drehrichtung vor der Anlagekante (14) vorgesehene Abstreifleiste (11) und eine entlang dieser im wesentlichen parallel dazu liegende Blechlippe (12) gemeinsam einen Eintrittsspalt (13) zum Spülkanal (10) im Reinigungselement (5) bilden.

2. Spaltfilter nach Anspruch 1, dadurch gekennzeichnet, dass der Spülkanal (10) aus Profilen (23 bis 27) mit im Gesamtquerschnitt geschlossener, nur vom Eintrittsspalt (13) durchgehend unterbrochener Gestalt gebildet ist.

3. Spaltfilter nach Anspruch 1, dadurch gekennzeichnet, dass der Spülkanal (10) aus Profilen (28) mit im Querschnitt offener Gestalt und aus einem diese abschliessenden Teil der Mantelfläche des Filtereinsatzes (1) gebildet ist.

4. Spaltfilter nach einem der Ansprüche 1 oder 2, dadurch gekennzeichnet, dass zwischen Anlagekante (14) und Abstreifleiste (11) durch Teile der Profile (23, 25, 26) zum einen und durch einen Teil der Mantelfläche des Filtereinsatzes (1) zum anderen ein Sammelkanal (20) gebildet wird, der über Öffnungen (21, 22) in den Profilen (23, 24, 26) mit dem Spülkanal (10) verbunden ist.

5. Spaltfilter nach einem der Ansprüche 1 bis 4, dadurch gekennzeichnet, dass der Eintrittsspalt (13) über Öffnungen (30) in den Profilen (28) mit dem Spülkanal (10) verbunden ist.

6. Spaltfilter nach einem der Ansprüche 1 bis 5, dadurch gekennzeichnet, dass die Blechlippe (12) in Längsrichtung angeordnete Wellen (17, 18) oder Noppen aufweist, deren Kämme bzw. Kuppen mit der Abstreifleiste (12) in Berührung stehen.

7. Spaltfilter nach einem der Ansprüche 1 bis 6, dadurch gekennzeichnet, dass die Ausspülöffnung (9) mit einem zum Spülvorgang freigebbaren Absperrorgan (19) verbunden ist.

**Revendications**

1. Filtre à fentes pour huile de graissage ou analogue, avec un boîtier et avec une garniture de filtre (1) cylindrique, rotative dans ce boîtier, avec une ouverture d'arrivée reliée à l'espace existant dans le boîtier en dehors de la surface enveloppe de la garniture de filtre (1), avec une ouverture (9) d'évacuation du rinçage disposée sur le boîtier en dehors de la surface enveloppe de la garniture de filtre, et avec une ouverture de départ disposée dans le boîtier et se trouvant en communication avec l'intérieur de la garniture de filtre (1), ainsi qu'avec un élément de nettoyage (5) prévu le long d'une partie de l'enveloppe de la garniture de filtre (1), cet élément de nettoyage comportant une arête d'appui s'appliquant contre la garniture de filtre (1), filtre à fentes caractérisé en ce que l'élément de nettoyage (5) est constitué d'un ou plusieurs profilés (23 à 29) qui constituent un canal de rinçage (10) lequel est en liaison avec l'ouverture (9) d'évacuation du rinçage, l'élément de nettoyage (5) comportant une bande de reclage (11) s'appliquant tangentiellement sur la garniture de filtre (1), se terminant en sens inverse du sens de rotation et étant prévue en avant, selon le sens de rotation, de l'arête d'appui (14), l'élément de nettoyage (5) comportant également une lèvre en tôle (12) placée le long de la bande de reclage et pratiquement parallèle à cette bande, cette lèvre en tôle (12) et la bande de raclage (11) constituant à elles deux une fente d'entrée (13) vers le canal de rinçage (10) dans l'élément de nettoyage (5).

2. Filtre à fentes selon la revendication 1, caractérisé en ce que le canal de rinçage (10) est constitué de profilés (23 à 27) avec une configuration fermée sur la totalité de la section transversale et interrompue seulement par la fente d'entrée (13) allant d'une extrémité des profilés à l'autre.

3. Filtre à fentes selon la revendication 1, caractérisé en ce que le canal de rinçage (10) est constitué de profilés (28) avec une configuration ouverte en section transversale et d'une partie, se raccordant à ce profilé, de la surface enveloppe de la garniture de filtre (1).

4. Filtre à fentes selon l'une des revendications 1 ou 2, caractérisé en ce que, entre l'arête d'appui (14) et la bande de raclage (11) un canal collecteur (20) est constitué d'une part, par des parties desprofilés (23, 25, 26), et, d'autre part, par une partie de la surface enveloppe de la garniture de filtre (1), ce canal collecteur étant relié au canal de rinçage (10) par l'intermédiaire d'ouvertures (21, 22) dans les profilés (23, 24, 26).

5. Filtre à fentes selon l'une des revendications 1 à 4, caractérisé en ce que la fente d'entrée (13) est reliée au canal de rinçage (10) par l'intermédiaire d'ouvertures (30) dans les profilés (28).

6. Filtre à fentes selon l'une des revendications 1 à 5, caractérisé en ce que la lèvre en tôle (12) comporte en direction longitudinale des ondulations (17, 18) ou des saillies, dont les sommets sont en contact avec la bande de reclage (11).

7. Filtre à fentes selon l'une des revendications 1 à 6, caractérisé en ce que l'ouverture (9) d'évacuation du rinçage est munie d'un organe de fermeture (19) susceptible d'être ouvert pour permettre le processus de rinçage.

**Claims**

1. An edge filter for lubricating oil or the like, the filter comprising: a vessel; a cylindrical filter element (1) rotatable therein; a flow inlet communicating with the space of the vessel beyond the peripheral wall of the filter element (1); a scavenging-current opening (9) arranged in the vessel beyond the peripheral wall of the filter element; a flow outlet arranged in the vessel and in communication with the interior of the filter element (1); and a cleaning element (5) extending longitudinally along a portion of the peripheral wall of the filter element (1) and having an abutment edge bearing on the filter element (1), characterized in that the cleaning element (5) comprises one or more shaped bodies (23 to 29) forming a scavenging duct (10) in communication with the scavenging-current opening (9), that the cleaning element (5) is provided with: a stripping blade (11) which bears tangentially on the filter element (1), one edge of which points in a direction opposite the element's direction of rotation and the main body of which is disposed – in said direction of rotation – in front of its abutment edge (14); and with a sheet-metal lip (12) extending along and substantially parallel with the stripping blade, and in that the stripping blade (11) together with the sheet-metal lip (12) form between them an inlet throat (13) to the scavenging duct (10) within the cleaning element (5).

2. An edge filter according to claim 1, characterized in that the configuration of the scavenging duct (10) as formed of the shaped bodies (23 to 27) is – viewing the entrie cross-section thereof – a continuous one except for the inlet throat (13) extending the entire length of the duct.

3. An edge filter according to claim 1, characterized in that the scavenging duct (10) is formed of the shaped bodies (28) having – in a cross-sectional view thereof – a discontinuous configuration and of a portion of the peripheral wall of the filter element (1) bridging this discontinuity.

4. An edge filter according to claim 1 or claim 2, characterized in that a collector duct (20) is formed between the abutment edge (14) and the stripping blade (11) by, on the one hand, portions of the shaped bodies (23, 25, 26) and, on the other hand, a portion of the peripheral wall of the filter element (1), and in that the collector duct communicates through apertures (21, 22) in the shaped bodies (23, 24, 26) with the scavenging duct (10).

5. An edge filter according to any of the claims 1 to 4, characterized in that the inlett throat (13) communicates through apertures (30) in the shaped bodies (28) with the scavenging duct (10).

6. An edge filter according to any of the claims 1 to 5, characterized in that the sheet-metal lip (12) has corrugations (17, 18) or knups extending along its longitudinal extent, and the crests or peaks of which contact the stripping blade (12).

7. An edge filter according to any of the claims 1 to 6, characterized in that the scavenging-current opening (9) is provided with a shut-off element (19) openable for starting the scavenging operation.

Fig.1a

Fig.1b

Fig. 2a

Fig. 2b

23

10

17,18

12

13    11    14

Fig. 3a

15

24

10

17,18

12

13    11    25    14

Fig. 3b

27

17,18

10    13    11    26    14

Fig. 3c

28

10

29

13    11    30    14

Fig. 3d